# EUROPEAN PATENT APPLICATION

(11) **EP 3 958 652 A1**
(43) Date of publication of application: **23.02.2022**
(21) Application number: 19924990.5
(22) Date of filing: 26.04.2019
(51) Int. Cl.: H05B 45/00

(54) **INTELLIGENT LAMP CONTROL SYSTEM AND FLICKER CONTROL CIRCUIT THEREOF**

(30) Priority: 19.04.2019 CN 201910319567; 19.04.2019 CN 201920548851 U
(71) Applicant: Qingdao Yeelink Information Technology Co., Ltd., Qingdao, Shandong 266000 (CN)
(72) Inventor: SUN, Shengli, Qingdao, Shandong 266000 (CN); WEI, Wei, Qingdao, Shandong 266000 (CN); JIANG, Zhaoning, Qingdao, Shandong 266000 (CN); LIU, Daping, Qingdao, Shandong 266000 (CN)
(74) Representative: Liebetanz, Michael
(86) International application number: PCT/CN2019/084481
(87) International publication number: WO 2020/211113

(57) **Abstract**

Disclosed are a flicker control circuit and an intelligent lamp control system. The flicker control circuit comprises a rectification circuit, a flicker detection circuit, a DC-DC conversion circuit and a control circuit, wherein an input end of the rectification circuit serves as an input end of the flicker control circuit, and the rectification circuit is used for rectifying an input alternating current; an input end of the flicker detection circuit is connected to the input end of the rectification circuit, an output end of the flicker detection circuit is connected to a first input end of the control circuit, and the flicker detection circuit is used for detecting a flicker phenomenon of an alternating current and outputting a generated flicker detection signal to the control circuit; an input end of the DC-DC conversion circuit is connected to an output end of the rectification circuit, and the DC-DC conversion circuit is used for supplying power to the control circuit; and the control circuit is used for adjusting a working state of a controlled device according to the flicker detection signal. In the present application, a flicker detection circuit is provided at an input end of a rectification circuit, such that the sensitivity and accuracy of a detection result can be effectively improved.

## Description

The present application claims priority to Chinese Patent Application No. 201910319567.8, titled "INTELLIGENT LAMP CONTROL SYSTEM AND FLASH CONTROL CIRCUIT THEREOF", filed on April 19, 2019 with the China National Intellectual Property Administration, and Chinese Patent Application No.201920548851.8 titled "INTELLIGENT LAMP CONTROL SYSTEM AND FLASH CONTROL CIRCUIT THEREOF", filed on April 19, 2019 with the China National Intellectual Property Administration, both of which are incorporated herein by reference in their entireties.

### FIELD

The present disclosure relates to the technical field of circuit switches, and in particular, to a system for controlling an intelligent lamp and a flash control circuit of the system for controlling the intelligent lamp.

### BACKGROUND

With the development of smart homes and electrical appliances, an intelligent lamp is becoming increasingly popular. Currently, the intelligent lamp is mostly regulated in a Wi-Fi remote intelligent mode. A wall switch in a turned-off state according to the conventional technology cuts off power for the intelligent lamp. In the case that the power is cut off, the intelligent lamp cannot receive a Wi-Fi command to be regulated. Therefore, the wall switch according to the conventional technology cannot be applied to a system for controlling an intelligent lamp. A flash switch can solve the above problem. A voltage of a circuit drops when the flash switch is touched, and then the voltage of the circuit increases again, so that the power for the intelligent lamp can be regulated after the flash switch is touched. However, the solution for detecting a switching action according to the conventional technology is mostly implemented by sampling after a rectifier bridge, and therefore a sampling result is affected by a load. Especially, in a case that the load is small (for example, the intelligent lamp is turned off), a sampling delay is relatively large, resulting in poor sensitivity of a detection result. In view of this, it is urgent for those skilled in the art to provide a solution to solve the technical problem.

### SUMMARY

A system for controlling an intelligent lamp and a flash control circuit for the system for controlling an intelligent lamp are provided according to the present disclosure, to effectively improve sensitivity and accuracy of a detection result of a flash switch.

To solve the above problem, in a first aspect, a flash control circuit is provided according of the present disclosure. The flash control circuit includes a rectifier circuit, a flash detection circuit, a DC-DC conversion circuit and a control circuit. An input end of the rectifier circuit is configured to be an input end of the flash control circuit. The rectifier circuit is configured to rectify input AC power. An input end of the flash detection circuit is connected with the input end of the rectifier circuit. An output end of the flash detection circuit is connected with a first input end of the control circuit. The flash detection circuit is configured to detect a flash of the AC power and output a flash detection signal to the control circuit. An input end of the DC-DC conversion circuit is connected with an output end of the rectifier circuit. The DC-DC conversion circuit is configured to supply power for the control circuit. The control circuit is configured to regulate an operation state of a controlled device according to the flash detection signal.

In an embodiment, the flash detection circuit includes a first resistor and a second resistor. A first terminal of the first resistor is configured to be the input end of the flash detection circuit. A second terminal of the first resistor is connected with a first terminal of the second resistor and is configured to be the output end of the flash detection circuit. A second terminal of the second resistor and the rectifier circuit are connected to a same ground.

In an embodiment, the flash detection circuit further includes a first capacitor connected in parallel with the second resistor.

In an embodiment, the flash detection circuit further includes a switching transistor and a third resistor. A control terminal of the switching transistor is connected with the first terminal of the second resistor. A first terminal of the switching transistor is connected with an output end of the DC-DC conversion circuit. A second terminal of the switching transistor is connected with a first terminal of the third resistor and is configured to be the output end of the flash detection circuit. A second terminal of the third resistor is grounded.

In an embodiment, the flash detection circuit further includes a voltage-regulator tube. A cathode of the voltage-regulator tube is connected with the control terminal of the switching transistor, and an anode of the voltage-regulator tube is grounded.

In an embodiment, the switching transistor includes a triode or a metal oxide semiconductor (MOS) transistor.

In an embodiment, the flash control circuit further includes a power-off detection circuit. An input end of the power-off detection circuit is connected with the output end of the DC-DC conversion circuit. An output end of the power-off detection circuit is connected with a second input end of the control circuit. The power-off detection circuit is configured to: detect power-off of the AC power and output a power-off detection signal to the control circuit, so that the control circuit can distinguish the flash of the AC power from the power-off of the AC power.

In an embodiment, the flash control circuit includes a fourth resistor, a fifth resistor and a second capacitor. A first terminal of the fourth resistor is configured to be the input end of the power-off detection circuit. A second terminal of the fourth resistor is connected with a first terminal of the fifth resistor and a first terminal of the second capacitor, and is configured to be the output end of the power-off detection circuit. A second terminal of the fifth resistor and a second terminal of the second capacitor are grounded.

In an embodiment, the flash control circuit further includes a filtering circuit arranged between the rectifier circuit and the DC-DC conversion circuit. The filtering circuit is configured to filter DC power output from the rectifier circuit.

In a second aspect, a system for controlling an intelligent lamp is further provided according to the present disclosure. The system for controlling an intelligent lamp includes a lamp group, a driving circuit, a flash switch and any one of the flash control circuits described above. The input end of the flash control circuit is connected with an AC power supply through the flash switch. A power supply end of the driving circuit is connected with the output end of the rectifier circuit. An output end of the driving circuit is connected with a driving end of the lamp group. The driving circuit is in communication connection with the control circuit through a wireless module. The control circuit is configured to transmit a wireless regulation command to the driving circuit according to the flash detection signal, to regulate an operation state of the lamp group.

The flash control circuit according to the present disclosure includes a rectifier circuit, a flash detection circuit, a DC-DC conversion circuit and a control circuit. An input end of the rectifier circuit is configured to be an input end of the flash control circuit. The rectifier circuit is configured to rectify input AC power. The input end of the flash detection circuit is connected with the input end of the rectifier circuit. An output end of the flash detection circuit is connected with a first input end of the control circuit. The flash detection circuit is configured to detect a flash of the AC power and output a flash detection signal to the control circuit. An input end of the DC-DC conversion circuit is connected with an output end of the rectifier circuit. The DC-DC conversion circuit is configured to supply power for the control circuit. The control circuit is configured to regulate an operation state of a controlled device according to the flash detection signal.

It can be seen that in the flash control circuit according to the present disclosure, the flash detection circuit is arranged at the input end of the rectifier circuit to detect the flash phenomenon in the AC power, which can effectively avoid the delay of the flash detection signal, so that the control circuit can regulate the controlled device according to the flash detection signal, thereby improving the sensitivity and the accuracy of the detection result. The system for controlling an intelligent lamp according to the present disclosure includes the flash control circuit described above, which has the same beneficial effect as the flash control circuit described above.

### BRIEF DESCRIPTION OF THE DRAWINGS

In order to more clearly illustrate technical solutions in the conventional technology and embodiments of the present disclosure, the drawings to be used in the description of the conventional technology and the embodiments of the present disclosure are briefly described below. Apparently, the drawings in the following description show only some embodiments of the present disclosure. All other drawings obtained by those skilled in the art from the drawings without any creative work fall within the protection scope of the present disclosure.
Figure 1 is a schematic structural diagram of a flash control circuit according to an embodiment of the present disclosure;
Figure 2 is a structural diagram of a flash detection circuit according to an embodiment of the present disclosure;
Figure 3 is a structural diagram of a flash detection circuit according to another embodiment of the present disclosure;
Figure 4 is a schematic structural diagram of a flash control circuit according to another embodiment of the present disclosure;
Figure 5 is a structural diagram of a power-off detection circuit according to an embodiment of the present disclosure; and
Figure 6 is a structural block diagram of a system for controlling an intelligent lamp according to an embodiment of the present disclosure.

### DETAILED DESCRIPTION

A system for controlling an intelligent lamp and a flash control circuit for the system for controlling an intelligent lamp are provided according to the present disclosure, to effectively improve sensitivity and accuracy of a detection result of a flash switch.

In order to describe technical solutions in embodiments of the present disclosure more clearly and completely, the technical solutions in the embodiments of the present disclosure are further described in conjunction with the drawings in the embodiments of the present disclosure hereinafter. It is apparent that the described embodiments are only some embodiments of the present disclosure, rather than all embodiments. All other embodiments obtained by those skilled in the art based on the embodiments of the present disclosure without any creative work fall within the protection scope of the present disclosure.

As described above, when a flash switch is touched, the flash switch may controls a circuit to be instantaneously turned off and then turned on. Specifically, when the flash switch operates once, the circuit is switched between a turn-on state and a turn-off state twice. That is, when the flash switch is touched, the circuit is switched from the turned-on state to the turned-off state, so that a voltage of the circuit drops or power is cut off; and when the flash switch is released, the circuit is switched to the turned-on state, so that the voltage increases. Alternatively, the flash switch may be provided with an automatic timing rebound structure, to automatically switch the circuit to the turned-on state when the circuit is turned off for a predetermined fixed time period. Since the process for the circuit switched from the turn-off state to the turned-on state requires a short time, the flash of the circuit occurs once when the flash switch is touched every time.

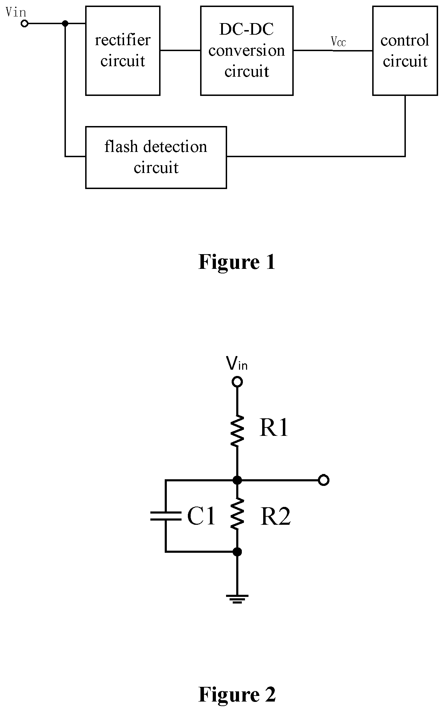

Referring to Figure 1, a flash control circuit is provided according to an embodiment of the present disclosure. The flash control circuit includes a rectifier circuit, a flash detection circuit, a DC-DC conversion circuit and a control circuit. An input end of the rectifier circuit serves as an input end of the flash control circuit. The rectifier circuit is configured to rectify input AC power. The input end of the flash detection circuit is connected with the input end of the rectifier circuit. An output end of the flash detection circuit is connected with a first input end of the control circuit. The flash detection circuit is configured to detect a flash of the AC power and output a flash detection signal to the control circuit. An input end of the DC-DC conversion circuit is connected with an output end of the rectifier circuit. The DC-DC conversion circuit is configured to supply power for the control circuit. The control circuit is configured to regulate an operation state of a controlled device according to the flash detection signal.

In the flash control circuit according to the embodiment of the present disclosure, the AC power input to the rectifier circuit may be 220V Further, the input end of the rectifier circuit may be connected with a live wire through the flash switch. The rectifier circuit may be a bridge rectifier circuit.

Referring to Figure 1, in the flash control circuit according to the embodiment of the present disclosure, the flash detection circuit is arranged at a front end or the input end of the rectifier circuit. A subsequent circuit structure of the rectifier circuit is generally provided with active devices such as a capacitor, so that the voltage changing in time is inconsistent with the input AC power through the flash switch changing in time. There is a delay between the change of the voltage and the change of the input AC power through the flash switch. According to the embodiment of the present disclosure, the flash detection circuit is directly used to sample and detect the AC power Vin input to the rectifier circuit through the flash switch, which can effectively avoid a detection error caused by the delay and improve the sensitivity and the accuracy of the detection result.

It should be noted that since all circuits including the rectifier circuit and the detection circuit are required to be grounded, a closed circuit is between the rectifier circuit and the detection circuit. Therefore, the AC power Vin is actually not pure AC power, but hybrid power including DC power and AC power. When the flash switch is turned on, the input AC power fluctuates up and down near amplitude. When the flash switch is turned off and the circuit is powered off, the amplitude drops and the fluctuation disappears.

When the flash switch controls the circuit to be in the turned-on state, a voltage of the flash detection signal output from the flash detection circuit is high. When the flash switch controls the circuit to be in the turned-off state, the voltage of the flash detection signal is low. Therefore, the voltage of the flash detection signal drops when the flash switch is touched, and then the voltage increases, so that the flash of the AC power caused by the switching action of the flash switch can be detected.

The control circuit may determine the change of the voltage of the flash detection signal by using a predetermined comparison threshold. In a case that the voltage of the flash detection signal decreased by greater than or equal to the comparison threshold, it may be determined that the voltage drops. In a case that the voltage of the flash detection signal increased by greater than or equal to the comparison threshold, it may be determined that the voltage increases. When the drop of the voltage and the increase of the voltage occur sequentially, it may be determined that the flash switch performs a switching action once. Generally, in a case that it is determined that the flash switch performs the switching action once, that is, the flash of the AC power occurs once, the control circuit may transmit a regulation command for an electrical device to regulate the operation state of the electrical device.

It should be noted that the flash control circuit according to the embodiment of the present disclosure may be applied to any electrical device requiring the flash switch. The electrical device may be an intelligent lamp. The control circuit may transmit a regulation command in a wireless communication mode such as Wi-Fi. The regulation command may be used to change the operation state of the electrical device. Taking the intelligent lamp as an example, in a case that it is determined that the flashing switch performs the switching action once, that is, the flash of the AC power occurs once, the intelligent lamp may be controlled to be turned on or turned off.

The flash control circuit according to the present disclosure includes a rectifier circuit, a flash detection circuit, a DC-DC conversion circuit and a control circuit. An input end of the rectifier circuit serves as an input end of the flash control circuit. The rectifier circuit is configured to rectify input AC power. The input end of the flash detection circuit is connected with the input end of the rectifier circuit. An output end of the flash detection circuit is connected with a first input end of the control circuit. The flash detection circuit is configured to detect the flash the AC power and output a flash detection signal to the control circuit. An input end of the DC-DC conversion circuit is connected with an output end of the rectifier circuit. The DC-DC conversion circuit is configured to supply power for the control circuit. The control circuit is configured to regulate an operation state of a controlled device according to the flash detection signal. It can be seen that in the flash control circuit according to the present disclosure, the flash detection circuit is arranged at the input end of the rectifier circuit to detect the flash of the AC power, which can effectively avoid the delay of the flash detection signal, so that the control circuit can regulate the controlled device according to the flash detection signal, thereby improving the sensitivity and the accuracy of the detection result.

Reference is made to Figure 2, which is a structural diagram of a flash detection circuit according to an embodiment of the present disclosure.

In the flash control circuit according to the embodiment of the present disclosure, based on the above embodiment, as an embodiment, the flash detection circuit includes a first resistor R1 and a second resistor R2. A first terminal of the first resistor R1 serves as the input end of the flash detection circuit. A second terminal of the first resistor R1 is connected with a first terminal of the second resistor R2 and serves as the output end of the flash detection circuit. A second terminal of the second resistor R2 and the rectifier circuit 1 are connected to a same ground.

The flash detection circuit according to the embodiment is implemented by resistors and a capacitor, which has advantages of a simple structure and a low cost. It is easy to understand that in the embodiment, the flash detection signal is obtained by a resistive voltage dividing circuit. Therefore, the voltage of the flash detection signal is equal to a voltage of the second resistor R2. Those skilled in the art may reasonably set a voltage dividing proportion of the resistive voltage dividing circuit according to an effective value of the AC power Vin, so that the voltage of the flash detection signal falls within a reasonable range.

Referring to Figure 2, in the flash control circuit according to the embodiment of the present disclosure, based on the above embodiment, as an embodiment, the flash detection circuit further includes a first capacitor C1 connected in parallel with the second resistor R2.

In the embodiment, by arranging the first capacitor C1 connected in parallel with the second resistor R2, a ripple of the flash detection signal may be reduced by a filtering function of the first capacitor C1, thereby further improving the accuracy of the detection result.

It should be noted that the flash detection signal output from the flash detection circuit 3 shown in Figure 2 is an analog voltage signal. In practices, the analog voltage signal is easily affected by a signal, resulting in affecting the accuracy of the detection result. Therefore, based on Figure 2, a switching transistor Q and a third resistor R3 are arranged, to convert the analog voltage signal into a digital signal, to overcome the disadvantage of the analog signal being easily affected.

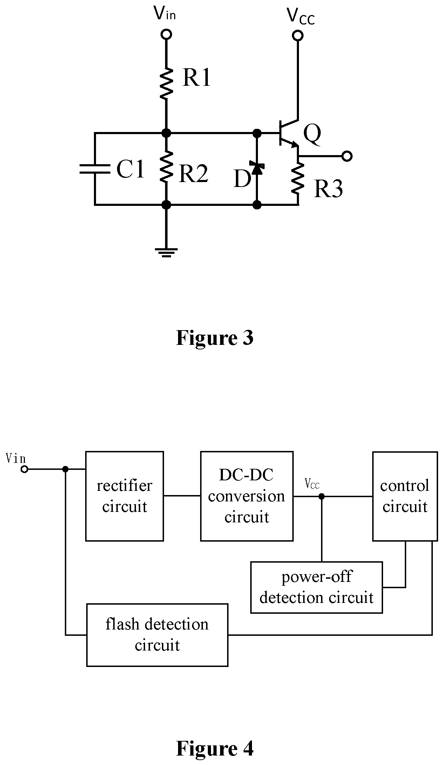

Reference is made to Figure 3, which is a structural diagram of a flash detection circuit according to another embodiment of the present disclosure.

In the flash control circuit according to the embodiment of the present disclosure, based on the above embodiment, as a preferred embodiment, the flash detection circuit further includes the switching transistor Q and the third resistor R3. A control terminal of the switching transistor Q is connected with the first terminal of the second resistor R2. A first terminal of the switching transistor Q is connected with the output end of the DC-DC conversion circuit 4. A second terminal of the switching transistor Q is connected with a first terminal of the third resistor R3 and serves as the output end of the flash detection circuit. A second terminal of the third resistor R3 is grounded.

It is determined whether the switching transistor Q is turned on or turned off depending on the voltage of the second resistor R2, that is, a voltage of the control terminal of the switching transistor Q. In a case that the voltage of the control terminal is greater than a threshold voltage of the switching transistor Q, the switching transistor Q is turned on and the digital signal output from the switching transistor Q is a high level. In a case that the voltage of the control terminal is lower than the threshold voltage of the switching transistor Q, the switching transistor Q is turned off, and the digital signal output from the switching transistor Q is pulled down to a low level by the third resistor R3. Therefore, the switching action of the flash switch, that is, the flash of the AC power, may be determined by the high level and low level of the digital signal.

Further, as shown in Figure 3, in the flash control circuit according to the embodiment of the present disclosure, based on the above embodiment, as a preferred embodiment, the flash detection circuit further includes a voltage-regulator tube D. A cathode of the voltage-regulator tube D is connected with the control terminal of the switching transistor Q. An anode of the voltage-regulator tube D is grounded.

In the embodiment, the voltage-regulator tube D is arranged at the control terminal of the switching transistor Q to protect the switching transistor Q, thereby preventing device from being broken down.

As an embodiment, the switching transistor Q includes a triode or a metal oxide semiconductor (MOS) transistor.

Reference is made to Figure 4, which is a schematic structural diagram of a flash control circuit according to another embodiment of the present disclosure.

Based on the above embodiment, as a preferred embodiment, the flash control circuit according to the embodiment of the present disclosure further includes a power-off detection circuit. An input end of the power-off detection circuit is connected with the output end of the DC-DC conversion circuit. An output end of the power-off detection circuit is connected with a second input end of the control circuit. The power-off detection circuit is configured to detect power-off of the AC power, and output a power-off detection signal to the control circuit, so that the control circuit can distinguish the flash of the AC power from the power-off of the AC power.

In addition, since the voltage of the flash detection signal also drops when the power grid is powered off, it is difficult to distinguish the flash of the AC power when the flash switch performs the switching action from the power-off of the AC power. Therefore, in the embodiment, a power-off detection circuit is arranged to distinguish the flash of the AC power from the power-off of the AC power. Specifically, the power-off detection circuit is arranged at the output end of the DC-DC conversion circuit to sample and detect a power supply voltage Vcc output from the DC-DC conversion circuit. The power supply voltage Vcc is a stable voltage output from DC-DC conversion, to supply power for the control circuit. The power supply voltage Vcc is generally 5V or 3.3V When the flash switch is touched, the power supply voltage Vcc gradually decreases at a slow speed. A touch time period of the flash switch is not too long, for example, the touch time period is generally less than or equal to 5s. Therefore, when the voltage starts to increase after the flash, a voltage of the power-off detection signal obtained by sampling and detecting the power supply voltage Vcc is generally greater than or equal to a power-off threshold. Further, in a case that the power grid is powered off for a long time period, the voltage of the power-off detection signal obtained is significantly lower than the power off threshold, or even close to zero. Therefore, by introducing the analysis of the power-off detection signal, the power-off of the power grid for a long time period may be distinguished from the flash of the AC power when the flash switch performs the switching action, thereby further improving the accuracy of the detection result.

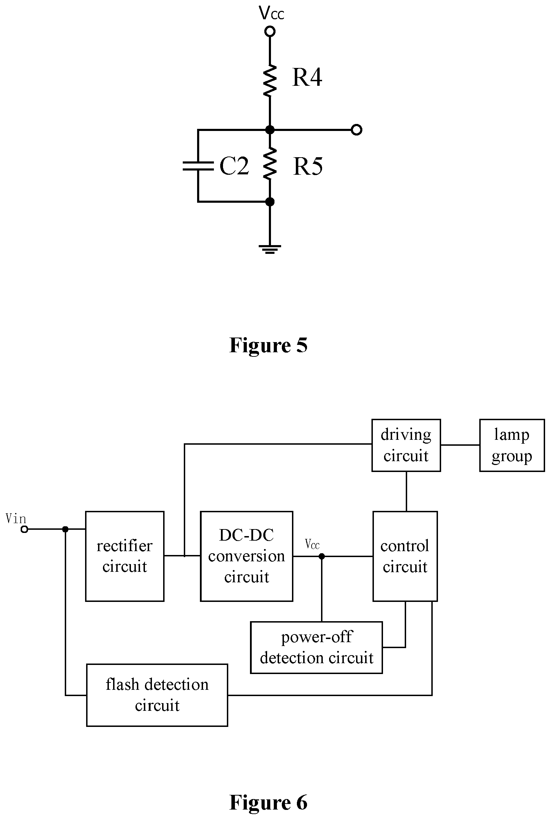

Reference is made to Figure 5, which is a structural diagram of a power-off detection circuit according to an embodiment of the present disclosure.

In the flash control circuit according to the embodiment of the present disclosure, based on the above embodiment, as a preferred embodiment, the power-off detection circuit includes a fourth resistor R4, a fifth resistor R5 and a second capacitor C2. A first terminal of the fourth resistor R4 serves as the input end of the power-off detection circuit. A second terminal of the fourth resistor R4 is connected with a first terminal of the fifth resistor R5 and a first terminal of the second capacitor C2, and serves as the output end of the power-off detection circuit 6. A second terminal of the fifth resistor R5 and a second terminal of the second capacitor C2 are grounded.

The power-off detection circuit according to the embodiment is implemented by resistors and capacitors. The fourth resistor R4 and the fifth resistor R5 form a resistive voltage dividing circuit. It is easy to understand that resistance of the fourth resistor R4, resistance of the fifth resistor R5 and capacitance of the second capacitor C2 affect a voltage drop rate of the power-off detection signal when the flash occurs. Those skilled in the art may determine reasonable resistance of the fourth resistor R4, resistance of the fifth resistor R5 and capacitance of the second capacitor C2 according to the actual requirements.

Based on the above embodiment, as a preferred embodiment, the flash control circuit according to the embodiment of the present disclosure further includes a filtering circuit arranged between the rectifier circuit and the DC-DC conversion circuit. The filtering circuit is configured to filter DC power output by the rectifier circuit.

Hereinafter, a system for controlling an intelligent lamp according to the present disclosure is described.

Reference is made to Figure 6, which is a structural block diagram of a system for controlling an intelligent lamp according to an embodiment of the present disclosure. The system for controlling an intelligent lamp includes a lamp group, a driving circuit, a flash switch and any one of the flash control circuits as described above. The input end of the flash control circuit is connected with an AC power supply through the flash switch. A power supply end of the driving circuit is connected with the output end of the rectifier circuit. An output end of the driving circuit is connected with a driving end of the lamp group. The driving circuit is in communication connection with the control circuit through a wireless module. The control circuit is configured to transmit a wireless regulation command to the driving circuit according to the flash detection signal, to regulate an operation state of the lamp group.

It can be seen that the system for controlling an intelligent lamp according to the present disclosure can effectively avoid the delay of the flash detection signal by arranging a flash detection circuit at the input end of the rectifier circuit to detect the flash of the AC power, so that the control circuit can regulate the controlled device according to the flash detection signal, thereby improving the sensitivity and the accuracy of the detection result.

For the specific implementation of the system for control an intelligent lamp according to the present disclosure, reference is made to the flash control circuit described above, which is not described redundantly herein.

The embodiments in this specification are described in a progressive way, each of which emphasizes the differences from others, and the same or similar parts among the embodiments can be referred to each other. Since the device disclosed in the embodiments corresponds to the method therein, the description thereof is relatively simple, and for relevant matters references may be made to the description of the method.

It should be further noted that the relationship terminologies such as first, second or the like are only used herein to distinguish one entity or operation from another, rather than to necessitate or imply that the actual relationship or order exists between the entities or operations. Furthermore, terms of "include", "comprise" or any other variants are intended to be non-exclusive. Therefore, a process, method, article or device including a series of elements includes not only the elements but also other elements that are not enumerated, or also includes the elements inherent for the process, method, article or device. Unless expressively limited otherwise, the statement "comprising (including) one..." does not exclude the case that other similar elements may exist in the process, method, article or device.

The technical solutions according to the present disclosure are described in detail above. The principle and the embodiments of the present disclosure are described herein by specific examples. The description of the above embodiments is intended to facilitate understanding the method and idea of the present disclosure. It should be noted that improvements and modifications may be made to the present disclosure by those skilled in the art without departing from the concept of the present disclosure. These improvements and modifications shall fall within the scope of the claims of the present disclosure.

## Claims

1. A flash control circuit, comprising a rectifier circuit, a flash detection circuit, a DC-DC conversion circuit and a control circuit, wherein
an input end of the rectifier circuit is configured to be an input end of the flash control circuit, and the rectifier circuit is configured to rectify input AC power;
an input end of the flash detection circuit is connected with the input end of the rectifier circuit, an output end of the flash detection circuit is connected with a first input end of the control circuit, and the flash detection circuit is configured to detect a flash of the AC power and output a flash detection signal to the control circuit;
an input end of the DC-DC conversion circuit is connected with an output end of the rectifier circuit, and the DC-DC conversion circuit is configured to supply power for the control circuit; and
the control circuit is configured to regulate an operation state of a controlled device according to the flash detection signal.

2. The flash control circuit according to claim 1, wherein the flash detection circuit comprises a first resistor and a second resistor, wherein
a first terminal of the first resistor is configured to be the input end of the flash detection circuit; and
a second terminal of the first resistor is connected with a first terminal of the second resistor and is configured to be the output end of the flash detection circuit, and a second terminal of the second resistor and the rectifier circuit are connected to a same ground.

3. The flash control circuit according to claim 2, wherein the flash detection circuit further comprises a first capacitor connected in parallel with the second resistor.

4. The flash control circuit according to claim 2, wherein the flash detection circuit further comprises a switching transistor and a third resistor, wherein
a control terminal of the switching transistor is connected with the first terminal of the second resistor; and
a first terminal of the switching transistor is connected with an output end of the DC-DC conversion circuit;
a second terminal of the switching transistor is connected with a first terminal of the third resistor and is configured to be the output end of the flash detection circuit; and
a second terminal of the third resistor is grounded.

5. The flash control circuit according to claim 4, wherein the flash detection circuit further comprises a voltage-regulator tube, wherein
a cathode of the voltage-regulator tube is connected with the control terminal of the switching transistor, and an anode of the voltage-regulator tube is grounded.

6. The flash control circuit according to claim 4, wherein the switching transistor comprises a triode or a metal oxide semiconductor, MOS, transistor.

7. The flash control circuit according to claim 1, further comprising a power-off detection circuit, wherein
an input end of the power-off detection circuit is connected with the output end of the DC-DC conversion circuit, an output end of the power-off detection circuit is connected with a second input end of the control circuit;
the power-off detection circuit is configured to:
detect power-off of the AC power and output a power-off detection signal to the control circuit, wherein the control circuit distinguishes the flash of the AC power from the power-off of the AC power.

8. The flash control circuit according to claim 7, wherein the power-off detection circuit comprises a fourth resistor, a fifth resistor and a second capacitor, wherein
a first terminal of the fourth resistor is configured to be the input end of the power-off detection circuit;
a second terminal of the fourth resistor is connected with a first terminal of the fifth resistor and a first terminal of the second capacitor, and is configured to be the output end of the power-off detection circuit; and
a second terminal of the fifth resistor and a second terminal of the second capacitor are grounded.

9. The flash control circuit according to any one of claims 1 to 8, further comprising:
a filtering circuit arranged between the rectifier circuit and the DC-DC conversion circuit, wherein the filtering circuit is configured to filter DC power output from the rectifier circuit.

10. A system for controlling an intelligent lamp, comprising a lamp group, a driving circuit, a flash switch and the flash control circuit according to any one of claims 1 to 9, wherein
the input end of the flash control circuit is connected with an AC power supply through the flash switch;
a power supply end of the driving circuit is connected with the output end of the rectifier circuit, and an output end of the driving circuit is connected with a driving end of the lamp group; and
the driving circuit is in communication connection with the control circuit through a wireless module, and the control circuit is configured to transmit a wireless regulation command to the driving circuit according to the flash detection signal, to regulate an operation state of the lamp group.
